# EUROPEAN PATENT APPLICATION

(11) **EP 3 591 133 A1**
(43) Date of publication of application: **08.01.2020**
(21) Application number: 19275079.2
(22) Date of filing: 13.06.2019
(51) Int. Cl.: E04D 13/064, E04D 13/068, F16B 37/14

(54) **PROTECTIVE COVER FOR FIXING MEANS**

(30) Priority: 04.07.2018 GB 201810968
(71) Applicant: H D Sharman Ltd, High Peak, Derbyshire SK23 0HW (GB)
(72) Inventor: JONES, Devlyn, High Peak, Derbyshire SK23 0HW (GB); HAMER, Jonathan, High Peak, Derbyshire SK23 0HW (GB)
(74) Representative: Wood, Graham

(57) **Abstract**

The invention relates to a protective cover for use in masking the potentially damaging effect of a drive portion head of a fixing means such as a screw on a material subsequently placed thereover. The cover includes a top portion to mask the top face of the head and a skirt portion to mask the side walls of the head. Typically, the cover portion is then overlaid with a lining material such as, for example, a sheet or liquid lining material for a gutter base and the provision of the cover portion prevents the fixing head from damaging the lining material, when a pressure is subsequently applied thereto.

## Description

The invention to which this application relates is a protective cover for use in masking the potentially damaging effect of the drive head portion of a fixing means, such as a screw and in particular, although not necessarily exclusively, a drive head of the same which in one example may be in the shape of a hexagonal head with a skirt. The drive head portion is typically provided with a base portion or skirt and then, depending upwardly from the same, there are provided drive formations, which, in one example, are hexagonally shaped sidewalls and, on the interior of the same, there can be_provided a recessed portion which, typically, is also hexagonally shaped.

The provision of the drive head portion is to allow the same to be contacted by a tool, typically a socket head or the like, which engages with the head formations in such a manner so as to allow the rotation of the tool when in location with the head, to be imparted to the head so as to rotate a threaded shaft with which the head is connected and so cause the fixing means to be screwed into, form or be removed from a threaded aperture depending on the direction of rotation.

The invention is particularly related to the use of the fixing means with gutter relining systems in order to allow components, such as downpipes, support brackets or the like which are required as part of the gutter system to be engaged to the gutter base lengths and/or so as to mechanically secure the lining to the original gutter substrate or base on which the same is being installed. Typically, the base is a sheet material which, when in position, forms the external face of the gutter and along which water moves to be drained. The provision of the liner onto the base therefore provides a continuous length of gutter lining which restores integrity to the original gutter base and is supported and secured to ensure that the lining is maintained at the required position and the fall of the gutter is maintained.

In practice, it is found that the provision of the fixing means, and in particular the heads of the fixing means, protrude which in turn, means that when another sheet material is pressed down onto the top of the same, the heads of the fixing means can cause damage to the sheet material, which weakens the sheet material at the location of the fixing head and or may cause piercing of the sheet material so that the sheet material is then prone to leakage at the location of the fixing heads.

In order to attempt to alleviate this problem, the conventional approach has been to use fixing means which have a domed shaped head which therefore presents a curved surface to the sheet material and, at least in theory, means that there is less opportunity for the head of the fixing means to protrude through the liner. Furthermore, the use of this form of fixing means is disliked by operators installing the gutter system as it is difficult for an effective drive connection to be achieved between the fixing means and the drive tool to drive the fixing means into the substrate.

Alternatively it is known to apply a mastic material around the head of the fitting means to try and smooth the edges of the head but this requires an extra fixing task to be performed by the installers which is a significant disadvantage with regards to access and the height above ground that the task is required to be performed. Another possibility would be to use a fleece or other 'padded' sheet material to attempt to smooth the edges but this material is not capable of being plastic welded and therefore cannot be used.

The aim of the present invention is therefore to provide fixing means of a form which allows a more secure fixing of the gutter system components to be achieved and, at the same time, to allow the potentially damaging effect of the fixing means head on the gutter system sheet material, to be reduced.

In a first aspect of the invention, there is provided a fixing means assembly, said assembly including a threaded shaft connected to a drive head portion, said drive head portion including drive formations to allow the engagement of a tool therewith to drive the fixing means into or from an item and wherein the said assembly includes a cover portion which is engageable with the drive head portion of the fixing means, to thereby substantially mask the external face of the drive head portion once the fixing means has been driven into a fixing position on the said item.

In one embodiment, the cover includes engagement means which allow the cover to be retained in position with the head of the fixing means.

In one embodiment, the head includes drive formations and the cover engagement means engage with one or more of the drive formations which are also masked by the said cover portion.

In one embodiment the drive formations are formed as a hexagon of sidewalls and with which a tool can be located to allow the fixing means to be driven into or from the item.

In one embodiment, the cover includes a skirt which overlies the peripheral external edge of the fixing means head.

Typically, the engagement means allow the cover to be retained in position with the head of the fixing means once the fixing means has been driven into the required position.

In one embodiment the said item is a gutter or a gutter component.

In one embodiment when the fixing means is in position in the item and the cover is engaged with the fixing means head, the fixing means head is masked by the cover from external exposure.

In one embodiment the cover has a further material applied thereafter when in position on the fixing means. In one embodiment the material is a sheet material for a gutter relining. In another embodiment the material is a liquid material which subsequently hardens to line a gutter to which the fixing means are attached.

In a further aspect of the invention there is provided a gutter system including a gutter base retained in position with respect to a building and roof with respect to which the gutter is provided to collect and move water, and one or more fixing means assemblies to secure components to the gutter, said fixing means assemblies including a threaded shaft and a drive head portion to allow the shaft to be driven into or from an item of the gutter system and wherein the fixing means assembly further includes a cover portion which is provided to be located on and substantially mask the external surface of the drive head portion once the fixing means is in position

In one embodiment the fixing means assemblies are used to secure relining components to the original gutter base along with a liner sheet material to reline the said gutter base.

Alternatively the fixing means assembly as described can be used to advantage at the installation of new guttering.

In a further aspect of the invention there is provided method of forming a lined gutter system for a building, said method including the steps of providing a material to form a gutter external surface, using fixing means assemblies including a threaded shaft and a drive head portion to allow the said shaft to be driven to allow the attachment of one or more components to the gutter and/or allow the gutter to be retained in position with respect to the said building to collect and move water, and wherein the method includes the step of providing the fixing means assembly with a cover and locating the cover on the drive head portion of the fixing means to substantially mask the external surface of the drive head portion prior to placing the lining material thereover.

In one embodiment the lining material is a sheet material or alternatively is a liquid material which subsequently hardens.

Specific embodiments of the invention are now described with reference to the accompanying drawings wherein;
Figures 1a-e illustrate a portion of a gutter system with fixing means assemblies in accordance with one embodiment of the invention;
Figures 2a-c illustrate a fixing means cover as used in Figures 1a-e in accordance with one embodiment of the invention;
Figures 3a-b illustrate in greater detail the cover of Figures 2a-c fitted to the drive means in accordance with the invention;
Figures 4a-e, illustrate a gutter with fixing means assemblies in accordance with a further embodiment of the invention;

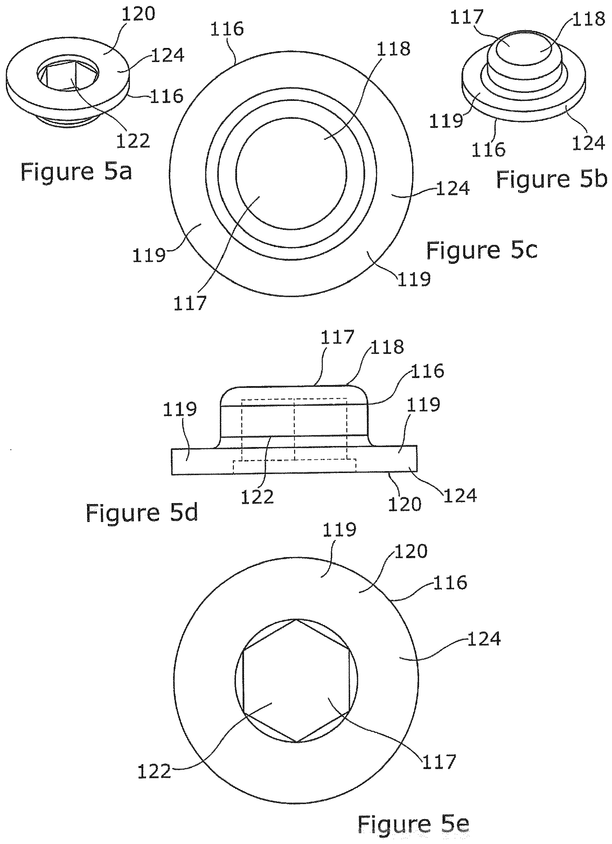

Figures 5a-e illustrate the cover used in Figures 4a-e in greater details; and
Figure 6 illustrate the fixing means assembly in use to attach a component to the gutter.

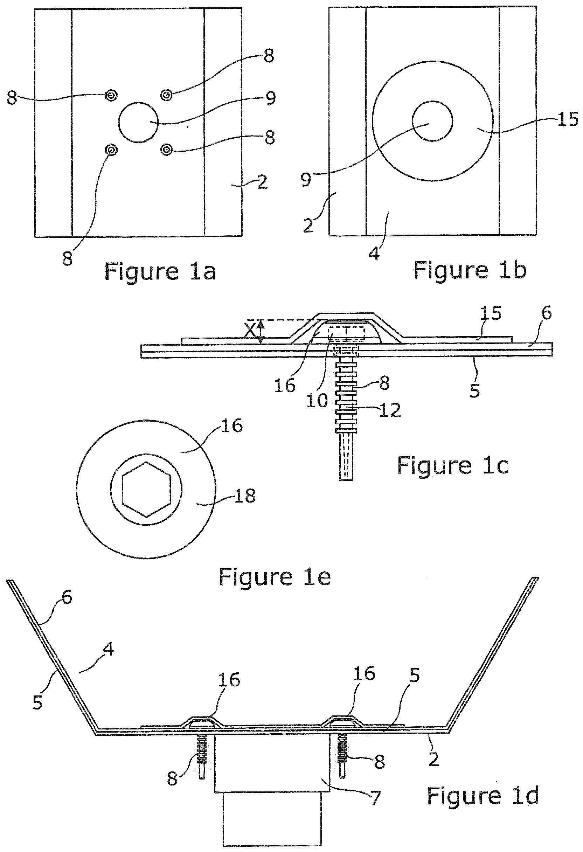

Referring firstly to Figures 1a-e there is illustrated a portion of a length of gutter 2 which is lined in accordance with one embodiment, in plan, in Figure 1a and b and in end view in Figure 1d. A detail of the layers at the fixing means is shown in end elevation in Figure 1c and a fixing means cover in accordance with one embodiment of the invention is shown in plan in Figure 1e.

The gutter base 5 includes an external surface 4 which is a shallow U shape and which is formed by a liner sheet material 6 placed onto the base 5 along the same so as to form the external surface 4 which is typically continuous along the length of the gutter base 5 or at least part thereof so as to minimise the risk of leakage through the gutter base through leaks or other damage or corrosion on the base. The liner is placed onto the base 5, which is typically the original gutter, and which provides structural support for the liner sheet material 6. Also shown in this embodiment is the provision of a component in the form of a down pipe fitting 7 which is required to be placed at the aperture 9 to pass therethrough in a sealed non-leaking manner. To achieve this the liner is fixed in position around the aperture 9 by a series of fixing means 8 positioned so as to suit the particular installation requirement.

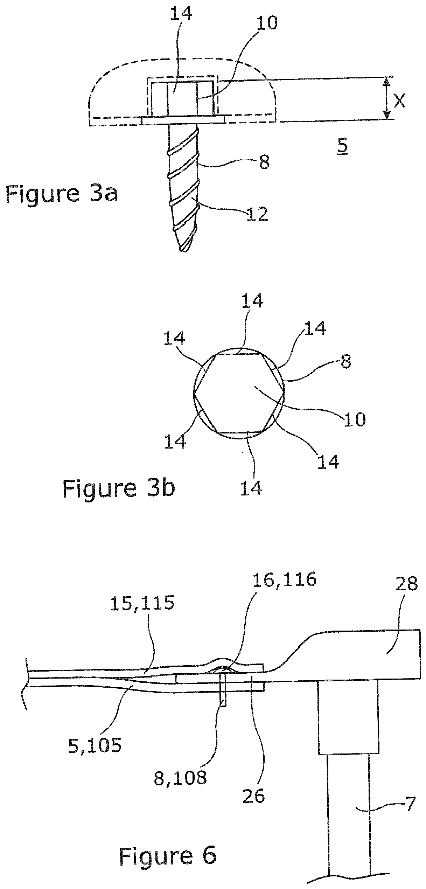

As shown in Figures 1a-e and Figures 3a and b the fixing means 8 includes a drive head portion 10 formed and connected integrally with a threaded shaft 12. The threaded shaft is provided to be driven through the liner 6 and base 5 so as to join and retain the same together. In order to allow the drive force to be applied, the drive head portion 10 includes one or more drive formations which, in this embodiment, include a series of side walls 14 located to form a hexagonal shape. The hexagonal head shape which is formed receives drive means, such as a socket driver, so that rotation of the socket driver causes rotation of the drive head portion 10 and, in turn, the threaded shaft 12.

Once the threaded shaft 12 has been driven into the required position, the drive head portion 10 protrudes above the liner 6 as indicated by the distance X in Figure 3a and as shown in Figure 1c. This protrusion, in conjunction with the relatively sharp edges and corners of the drive formation 14, represents a significant risk of the same piercing the subsequent layer of lining material 15 which is placed over the fixing means and welded in position if it is a sheet material so as to provide the sealed join of the downpipe 7 in position.

A solution to this problem is provided in accordance with the invention and as shown in Figures 1a-e, 2a-c and Figures 3a-b by providing, as part of the fixing means assembly, a cover 16. The cover is provided with an external face 18 which is formed to have rounded corners and edges and therefore has no sharp edges. The external face 18 of the cover, once the cover 16 is engaged on the drive head portion 10 of the fixing means will therefore contact with the underside of the lining material layer 15 instead of the drive head portion 10 and so the risk of piercing the lining material layer 15 by the sharp edges of the drive head portion 10 is removed.

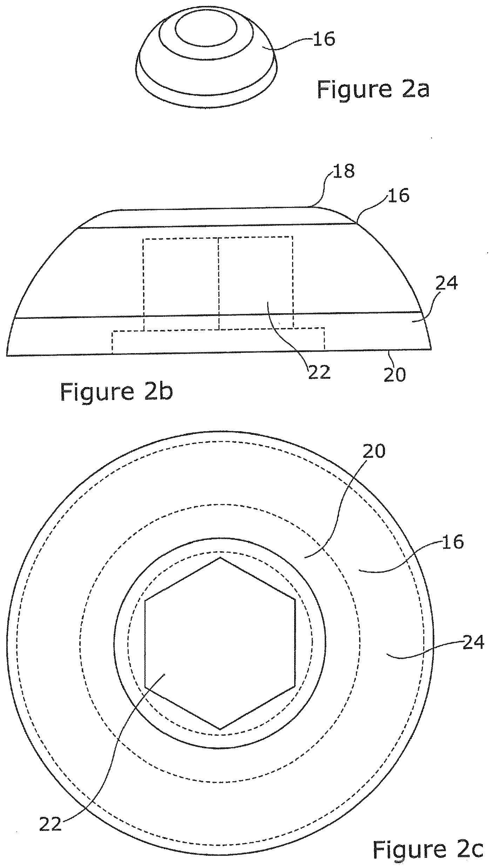

In order to engage the cover with the drive head portion the underside 20 of the cover is provided with a skirt portion 24 and a recess 22 which is shaped so as to allow the same to be pressed onto and over the hexagonal shaped drive formation 14 and engage therewith either a friction fit or by the provision of engagement protrusions and thereby retain the cover 16 in position on the fixing means drive head portion 10. In order to aid the retention of the cover 16 on the fixing head, the cover 16 may be formed of a suitable material which has sufficient resilience to allow the recess 22 to be slightly expanded to fit onto the drive formation 14 and then cause the same to grip onto the drive formation 14 once placed thereon and as illustrated in broken lines in Figure 2. In one embodiment the material can be a low density polyethylene (LDPE) based polymer blend.

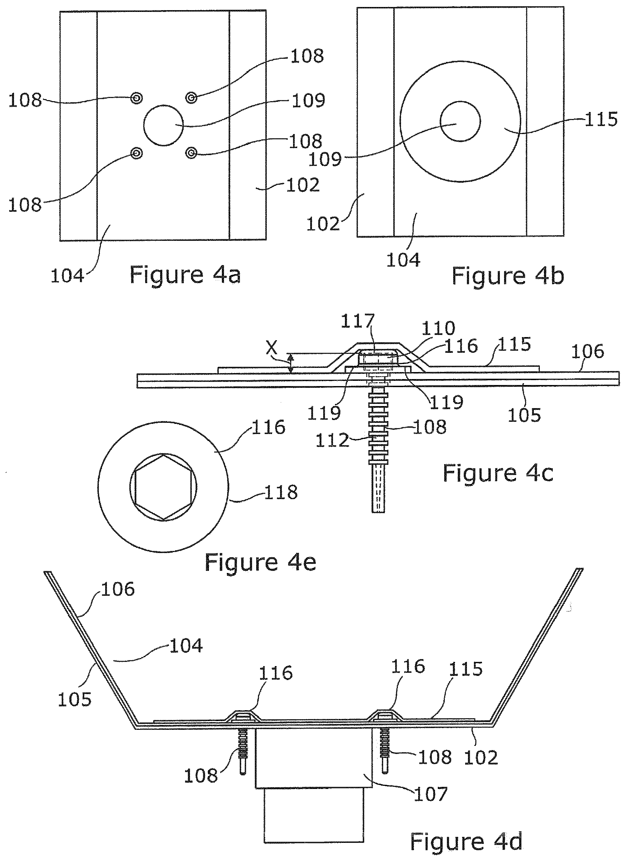

Referring now to Figures 4a-e there is illustrated an alternative embodiment of the fixing means assembly which is shown, once again, with a length of gutter 102 which is lined using a sheet material liner or a material which is applied in a liquid form and then subsequently hardens.

The gutter base 105 external surface 104 is thus formed by the liner material 106 once the same has been applied to the base 105. One or more components 107 can be connected to the gutter and the example shown is a downpipe assembly placed at the aperture 109 to allow water to pass from the gutter therethrough. A series of fixing means assemblies 108 are positioned so as to allow the connection of the component 107 with the base 105 of the gutter. In this embodiment the fixing means assembly 108 again includes a drive head portion 110 formed and connected integrally with a threaded shaft 112 which is provided to be driven into the base 105 so as to join and retain the same together. In order to allow the drive force to be applied, the drive head portion 110 again includes one or more drive formations in the form of side walls 114 which form the hexagonal drive formation for the receipt of a drive means tool carried by the installer so that rotation of the socket driver causes rotation of the drive head portion 110 and, in turn, the threaded shaft 112 into the base 105. In this embodiment the fixing means cover 116 is provided with an external face 18 which is formed to have a protruding central portion 117 and a peripheral skirt portion 119 and again has rounded corners and edges and therefore has no sharp edges. This external face 118 of the cover, once the cover 116 is engaged on the drive head portion 110 of the fixing means contacts with the underside of the layer 115 instead of the drive head portion 110 and so the risk of piercing from the sharp edges of the drive head portion 110 is removed. Once again, in order to engage the cover with the drive head portion the underside 120 of the cover is provided with a skirt portion 124 and a recess 122 which is shaped so as to allow the same to be pressed onto and over the hexagonal shaped drive formation of the head portion.

Figure 6 illustrates an embodiment of the use of fixing means assemblies to attach an outlet component 28 to a downpipe 7. In this embodiment there is provided the gutter base 5;105 and the outlet component 28 has a protruding part 26 which overlies the base 5;105 and through which fixing means assemblies are driven so as to secure the part 26 and hence outlet component 28 to the gutter. When the fixing means 8,108 have been driven into the base, the installer locates a cover 16,116 over the drive head and then the lining material 15,115 can be applied thereover with a reduced risk of the puncturing of the lining material. Typically, the cover is capable of being load baring once located on the drive head.

## Claims

1. A fixing means assembly, said assembly including a threaded shaft connected to a drive head portion, said drive head portion including drive formations to allow the engagement of a tool therewith to drive the fixing means into or from an item and wherein the said assembly includes a cover portion which is engageable with the drive head portion of the fixing means, to thereby substantially mask the external face of the drive head portion once the fixing means has been driven into a fixing position on the said item.

2. An assembly according to claim 1 wherein the cover portion includes engagement means which allow the cover to be retained in position with the drive head portion of the fixing means.

3. An assembly according to claim 2 wherein the cover engagement means engage with one or more of the said drive formations.

4. An assembly according to claim 1 wherein the drive formation is formed as a hexagonal shape with the tool located with the sidewalls to allow the fixing means to be driven into or from the item.

5. An assembly according to any of the preceding claims wherein the cover includes a skirt which overlies the peripheral edge of the drive head portion when engaged therewith.

6. An assembly according to claim 1 wherein when the fixing means is in position in the item and the cover portion is engaged with the drive head portion the drive head portion is masked by the cover from external exposure.

7. A gutter system including a gutter base retained in position with respect to a building and roof with respect to which the gutter is provided to collect and move water, and one or more fixing means assemblies to secure components to the gutter, said fixing means assemblies including a threaded shaft and a drive head portion to allow the shaft to be driven into or from an item of the gutter system and wherein the fixing means assembly further includes a cover portion which is provided to be located on and substantially mask the external surface of the drive head portion once the fixing means is in position.

8. A system according to claim 7 wherein the fixing means assemblies are used to secure components to the original gutter base along with a lining material to reline the said gutter base and which overlies the cover of the fixing means.

9. A method of forming a lined gutter system for a building, said method including the steps of providing a lining material to form a gutter external surface, using fixing means assemblies including a threaded shaft and a drive head portion to allow the said shaft to be driven to allow the attachment of one or more components to the gutter and/or allow the gutter to be retained in position with respect to the said building to collect and move water, and wherein the method includes the step of providing the fixing means assembly with a cover and locating the cover on the drive head portion of the fixing means to substantially mask the external surface of the drive head portion prior to placing the lining material thereover.

10. A cover for the head of a fixing means in the form of a screw having a threaded shaft and a drive head portion said drive head portion including drive formations and said cover portion includes engagement means to engage with the said drive formations and thereby engage the cover portion with the drive head portion, and said engagement means include protrusion on the underside of the cover portion and inner walls of a skirt portion depending downwardly from the top portion.
